# EUROPEAN PATENT SPECIFICATION

(11) **EP 2 889 932 B1**
(45) Date of publication and mention of the grant of the patent: **17.10.2018**
(21) Application number: 13833308.3
(22) Date of filing: 30.07.2013
(51) Int. Cl.: H01M 2/10, H01M 10/0525, H01M 2/20, H01M 10/04, H01M 10/48, H01M 10/647, H01M 10/6561, H01M 10/613

(54) **POWER STORAGE DEVICE**
ENERGIESPEICHERVORRICHTUNG
DISPOSITIF DE STOCKAGE D'ÉNERGIE

(30) Priority: 27.08.2012 JP 2012186772
(43) Date of publication of application: 01.07.2015
(73) Proprietor: NEC Energy Devices, Ltd., Kanagawa 2525298 (JP)
(72) Inventor: SUZUKI, Toru, Sagamihara-shi Kanagawa 252-5298 (JP)
(74) Representative: Vossius & Partner Patentanwälte Rechtsanwälte mbB
(86) International application number: PCT/JP2013/070552
(87) International publication number: WO 2014/034351

(56) References cited:
- EP-A2- 2 343 752
- WO-A1-2012/105643
- WO-A1-2012/132134
- WO-A1-2013/103072
- JP-A- 2000 208 121
- JP-A- 2002 117 821
- JP-A- 2011 113 966
- KR-A- 20120 051 237

## Description

### Technical Field

The present invention relates to a power storage device that houses a plurality of battery modules each constructed by using a secondary unit battery such as a lithium ion battery.

### Background Art

Recently, as a solution for environmental problems, clean energy which can be obtained by wind power generation, solar power generation, or the like and can be used for household uses (for detached houses, etc.) or for industrial uses (for transport equipment, construction equipment, etc.) is attracting attention. However, the clean energy has a disadvantage in that output variation becomes large depending on the situation. For example, energy by the solar power generation can be obtained in the daytime where the sun is shining, while it cannot be obtained at night where the sun sets.

To stabilize the output of the clean energy, technology that temporarily stores the clean energy in a battery is used. For example, solar energy thus stored in the battery becomes available at night where the sun set. In general, a lead battery has been used as a battery for storing the clean energy; however, the lead battery has a disadvantage in that it is generally large in size and low in energy density.

Thus, recently, a lithium ion secondary battery capable of operating at normal temperature and having a high energy density is attracting attention. In addition to the high energy density, the lithium ion secondary battery has a low impedance and is thus excellent in responsiveness.

In order to obtain a power storage device to be used in a high voltage environment by using the above lithium ion secondary battery, it is necessary to prepare a battery module in which a plurality of unit batteries are connected in series or to connect a plurality of such battery modules in series. Under such circumstances, various proposals for constructing an assembly of a plurality of unit batteries or a plurality of battery modules have been made.

For example, Patent Document 1 (JP2012-146588A) discloses a battery module including a plurality of lithium ion secondary batteries which are combined together. Each of the lithium ion secondary batteries has a columnar shape with a pair of bottom and side surfaces . The side surface has a shape of a rectangular column with rounded corners made up of a pair of flat surfaces and a pair of curved surfaces. In the battery module, the lithium ion secondary batteries are arranged such that the flat surfaces thereof face each other with a gap therebetween and that the bottom surfaces thereof face in the same direction. The plurality of lithium ion secondary batteries are fixed by aligners and a frame-like casing. The frame-like casing has braces.
[Patent Document 1]: JP2012-146588A

EP 2 343 752 A2 relates to a battery pack including first battery blocks, a core block, a plate-shaped circuit board, and a case. KR 2012 0051237 A relates to a battery module case aimed at increasing a heat radiating effect and minimizing impact from the outside.

JP 2011 113966 A relates to a battery pack wherein a plurality of storage batteries are connected with each other.

### Disclosure of the Invention

### Problems to be Solved by the Invention

In a power storage device, there is an individual difference in the unit battery or the battery module in which the plurality of the unit batteries are connected in series. Thus, as a result of a long-term use, there may occur a case where one of the unit batteries or one of the battery modules are replaced with a new one. For this reason, the power storage device preferably has a configuration capable of easily replacing the unit battery or the battery module with a new one. That is, it is preferable to easily remove/attach a power supply line for the unit battery or the battery module or a signal line for monitoring battery performance and to easily detach/attach the unit battery or the battery module itself.

On the other hand, the power storage device is required to have a predetermined strength against vibration or impact, in addition to the replaceability of the unit battery or the battery module.

However, to realize the replaceability of the unit battery or the battery module in the power storage device and to secure vibration resistance/impact resistance are contrary to each other, and it is difficult to achieve the both at the same time.

For example, Patent Document 1 mentions the vibration resistance/impact resistance, but does not at all the replaceability of the lithium ion secondary battery.

### Means for Solving the Problems

To solve the above problem, according to an aspect of the present invention, there is provided a power storage device including: a bottom plate having a plurality of lower guide members; a top plate provided above the bottom plate and having a plurality of upper guide members facing the lower guide members; a first side plate and a second side plate provided between the bottom plate and the top plate so as to face each other; a back surface plate provided between the first and second side plates and having a plurality of connectors; a battery module inserted between the lower and upper guide members and having connectors to be fitted to the connectors of the back surface plate; and a pressing plate provided between and fixed to the first and second side plates so as to press the battery module.

In the power storage device according to a preferred aspect of the present invention, the pressing plate does not contact the bottom plate.

In the power storage device according to a preferred aspect of the present invention, the pressing plate does not contact the top plate.

In the power storage device according to the present invention, a virtual plane positioned in the middle between the bottom and top plates crosses the pressing plate.

In the power storage device according to a preferred aspect of the present invention, the pressing plate is made of a stainless steel.

In the power storage device according to a preferred aspect of the present invention, the pressing plate is fixed to the first and second side plates by bolts and nuts.

In the power storage device according to a preferred aspect of the present invention, the bottom plate has a ventilation opening.

In the power storage device according to a preferred aspect of the present invention, the top plate has a ventilation opening.

In the power storage device according to a preferred aspect of the present invention, the first and second side plates each have a ventilation opening.

In the power storage device according to the present invention, the battery module includes a plurality of unit batteries.

In the power storage device according to the present invention, the unit battery may be a lithium ion secondary battery having an electrode laminate obtained by laminating positive and negative electrodes through separators and a laminate film exterior material housing the electrode laminate and an electrolyte. The invention is defined by claim 1. Preferred embodiments are comprised by the dependent claims.

### Advantages of the Invention

In the power storage device according to the present invention, the battery module can be detached/attached with respect to the power storage device while being guided by the guide member, and wiring can be made through the connectors. Further, there is provided the pressing plate that presses the battery module in the fitting direction between the connector of the back surface plate and connector of the battery module. Thus, in the power storage device 1300 according to the present invention, replaceability of the battery module can be achieved, as well as, vibration resistance/impact resistance of the power storage device can be ensured.

### Brief Description of the Drawings

FIGS. 1A to 1C are views each illustrating a unit battery 100 constituting a battery module and its preliminary processing process.
FIG. 2 is a view explaining a unit battery housing 800 used to form the battery module.
FIG. 3 is a view explaining the unit battery housing 800 used to form the battery module.
FIGS . 4A and 4B are views each explaining mounting of a first connector 828 to the unit battery housing 800.
FIG. 5 is a view explaining mounting of a second connector 840 to a connector mounting panel 847.
FIG. 6 is a view explaining mounting of the connector mounting panel 847 to the unit battery housing 800.
FIG. 7 is a front view of the second connector 840 mounted to the unit battery housing 800.
FIG. 8 is a view explaining a production process of the battery module.
FIG. 9 is a view explaining a production process of the battery module.
FIG. 10 is a view explaining a production process of the battery module.
FIG. 11 is a view explaining a production process of the battery module.
FIG. 12 is a view explaining a production process of the battery module.
FIG. 13 is a view explaining a production process of the battery module.
FIG. 14 is a view explaining a production process of the battery module.
FIG. 15 is a view explaining a production process of the battery module.
FIG. 16 is a perspective view illustrating the battery module in an exploded manner.
FIG. 17 is a perspective view illustrating the battery module 1000.
FIG. 18 is a view explaining a production process of a battery management circuit unit 1100.
FIG. 19 is a view explaining a production process of the battery management circuit unit 1100.
FIG. 20 is a view explaining a production process of the battery management circuit unit 1100.
FIG. 21 is a view illustrating the battery management circuit unit 1100.
FIG. 22 is a perspective view illustrating a configuration of a rack member 1200.
FIG. 23 is a view illustrating a state where a top plate 1220 and a second side plate 1240 are removed from the rack member 1200.
FIG. 24 is a front view of the rack member 1200 as viewed in a direction indicated by an arrow F of FIG. 22.
FIG. 25 is a view explaining attachment of the battery module 1000.
FIGS. 26A to 26C are each explaining a configuration around the second connector 840 of the battery module 1000.
FIG. 27 is a view illustrating a power storage device 1300 according to an embodiment of the present invention.
FIG. 28 is a view explaining a positional relationship between a virtual plane P and a pressing plate 1260.

### Best Mode for Carrying Out the Invention

An embodiment of the present invention will be described below with reference to the drawings.

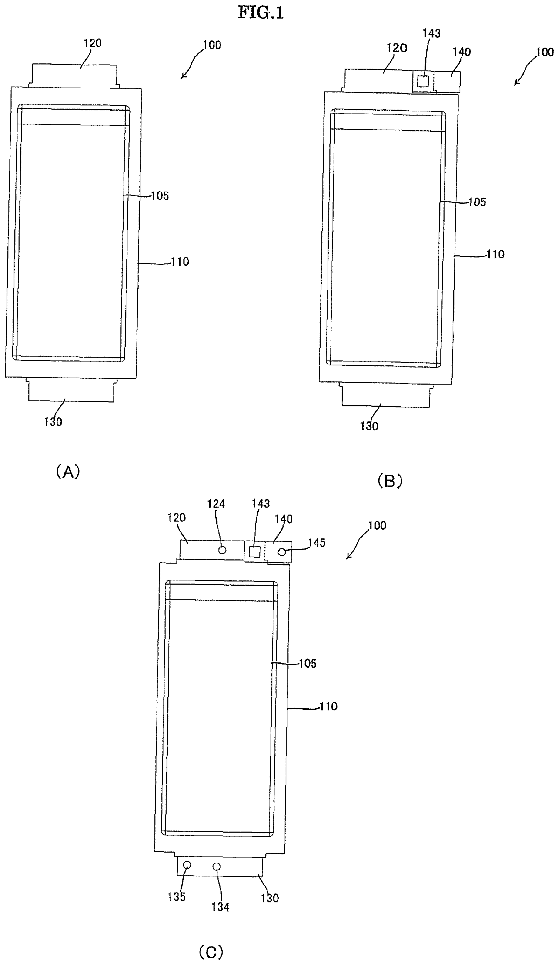

FIG. 1 is a view illustrating a unit battery 100 constituting a battery module and its preliminary processing process. As the unit battery 100, a lithium ion secondary battery as a kind of an electrochemical element, in which lithium ion is moved between positive and negative electrode to perform charging and discharging is used.

FIG. 1A illustrates the unit battery 100 before the preliminary processing. A battery body 110 of the unit battery 100 has a structure in which an electrode laminate (not illustrated) obtained by laminating a plurality of sheet-like positive electrodes and a plurality of sheet-like negative electrodes through separators and electrolyte (not illustrated) are housed in a laminate film exterior material having a rectangular shape in a plan view. A positive electrode lead-out tab 120 and a negative electrode lead-out tab 130 are drawn, respectively, from one end portion (side) of the battery body 110 and the other end portion (side) opposite to the one end portion. A laminating direction in which the plurality of the sheet-like positive electrodes and plurality of the negative sheet-like electrodes are laminated through the separators is defined as a sheet thickness direction.

The positive electrode lead-out tab 120 and negative electrode lead-out tab 130 each have a planar shape and are connected, inside the laminate film exterior material, to the sheet-like positive electrodes and the sheet-like negative electrodes, respectively, directly or through a lead body. The laminate film exterior material is constituted by a metal laminate film having a heat sealing resin layer. More specifically, for example, two metal laminate film are put one over the other with the heat sealing resin layers facing each other to form the laminate film exterior material, and an outer periphery of the laminate film exterior material is heat-sealed with the electrode laminate including the sheet-like positive electrodes, the sheet-like negative electrodes, and the separators and the electrolyte housed inside the laminate film exterior material, whereby the laminate film exterior material is internally hermetically sealed.

Here, a metal piece such as the positive electrode lead-out tab 120 or the negative electrode lead-out tab 130 drawn from the battery body 110 including the laminate film exterior material is referred to as "lead-out tab", and the sheet-like positive electrode or the sheet-like negative electrode laminated to each other through the separators inside the laminate film exterior material is referred to as "electrode".

The electrode laminate includes, in addition to the above electrode laminate obtained by laminating the plurality of the sheet-like positive electrodes and the plurality of the sheet-like negative electrodes through the separators, an electrode laminate obtained by rolling and compressing a laminated body obtained by laminating the plurality of the sheet-like positive electrodes and plurality of the sheet-like negative electrodes through the separators.

Generally, in the unit battery 100 as described above, aluminum or an aluminum alloy is used as a material for the positive electrode lead-out tab 120; and nickel, a material (nickel plating material (e.g., nickel-plated copper)) obtained by applying nickel-plating to metal other than the nickel, or a clad (nickel clad material (e.g., nickel-copper clad)) of nickel and metal other than the nickel is used as a material for the negative electrode lead-out tab 130. In the present embodiment, the positive electrode lead-out tab 120 is made of aluminum, and the negative electrode lead-out tab 130 is made of nickel-plated copper.

Preliminary processing, which is needed before formation of the battery module, is performed for the thus configured unit battery 100. First, as illustrated in FIG. 1B, an additional tab member 140 made of copper is ultrasonically welded at a welding portion 143 to be connected to the positive electrode lead-out tab 120. A reason for using such an additional tab member 140 will be described.

In forming the battery module according to the present invention, the positive electrode lead-out tab 120 of one unit battery 100 and the negative electrode lead-out tab 130 of another unit battery 100 adjacent to the one unit battery 100 are mechanically fixed to a copper bus bar by a screw for electrical connection.

In the configuration in which the aluminum-containing positive electrode lead-out tab 120 of the unit battery 100 is mechanically fixed to the copper bus bar, conductivity may degrade after elapse of a predetermined time period due to a potential difference.

In order to cope with this, in the battery module according to the present invention, the additional tab member 140 made of copper is joined by welding to the positive electrode lead-out tab 120 of the unit battery 100, as described above. Then, the additional tab member 140 made of copper is mechanically fixed to the bus bar so as to prevent degradation of the conductivity due to a potential difference. With this configuration, electrical connection is achieved by metal materials of the same type at the mechanical electrical connection portion, eliminating the problem of the potential difference, so that degradation of the conductivity hardly occurs over a prolonged period of time.

In a process illustrated in FIG. 1C, a positioning through hole 124 is formed in the positive electrode lead-out tab 120, a through hole 145 is formed in the additional tab member 140 added to the positive electrode lead-out tab 120, and a positioning through hole 134 and a through hole 135 are formed in the negative electrode lead-out tab 130. Of these through holes, the positioning through hole 124 of the positive electrode lead-out tab 120 and the positioning through hole 134 of the negative electrode lead-out tab 130 are used when the unit battery 100 is set in a unit battery housing 800 to be described in detail later.

Unit battery positioning projections 860 are formed in the unit battery housing 800. When the unit battery 100 is placed in the unit battery housing 800, the unit battery positioning projections 860 are made to penetrate the positioning through hole 124 and the positioning through hole 134, respectively. This makes it possible to easily set the unit battery 100 in the unit battery housing 800, thereby achieving high production efficiency.

The through hole 145 of the additional tab member 140 and the through hole 135 of the negative electrode lead-out tab 130 are, as described later, used for the following purposes: (1) to mechanically fix the unit battery 100 to the unit battery housing 800; (2) to electrically connect the tab to the bus bar of the unit battery housing 800; and (3) to electrically connect the tab to a sense line and a power source line.

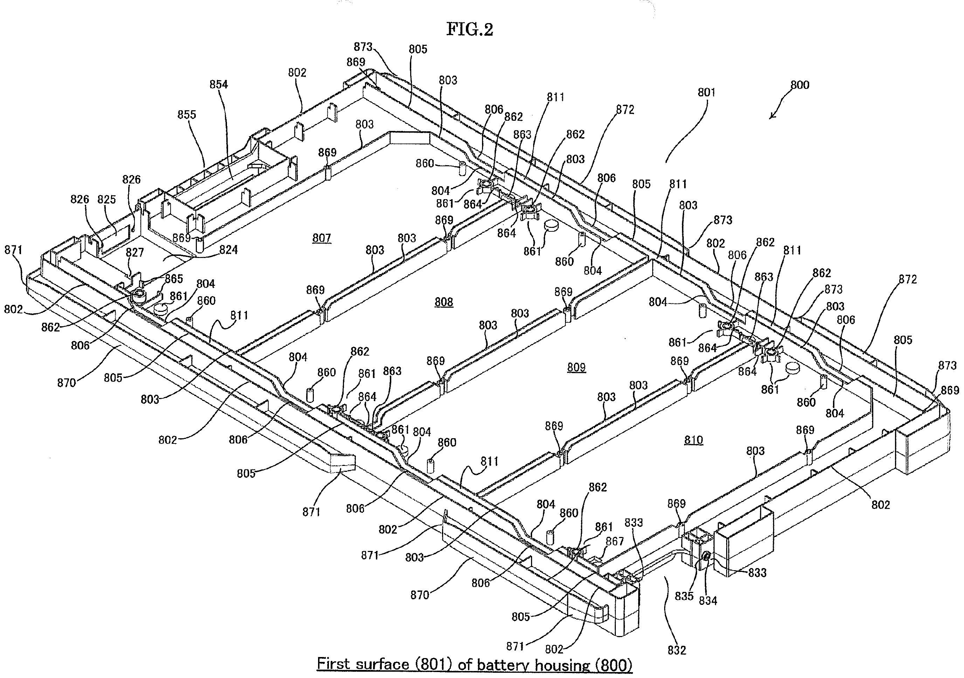

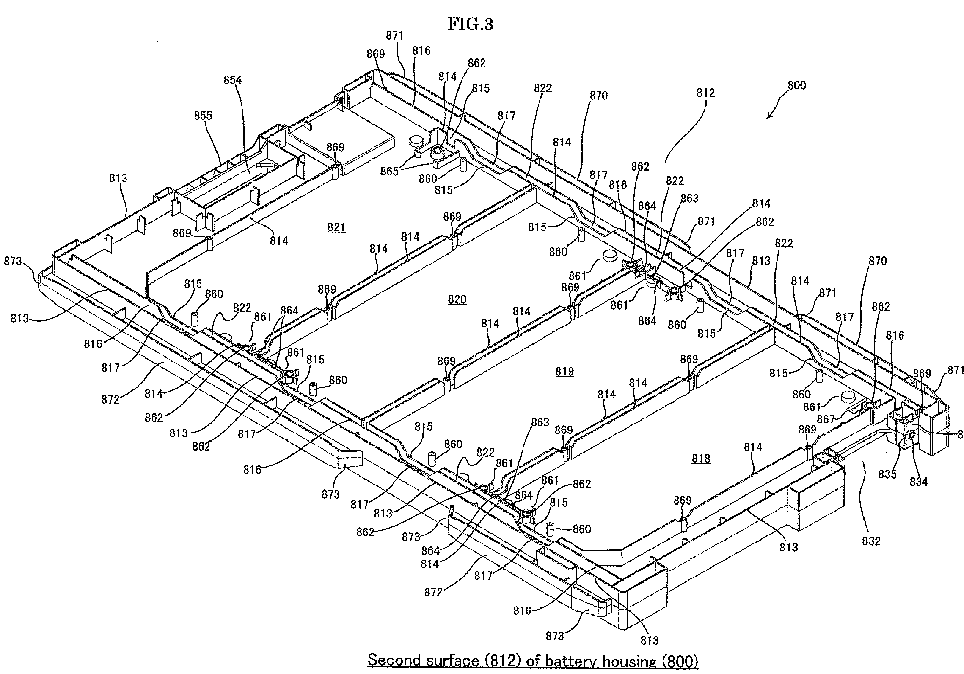

The following describes a detailed configuration of the unit battery housing 800 for housing the unit battery 100 thus subjected to the preliminary processing. FIGS. 2 and 3 are views each explaining the unit battery housing 800 used to form the battery module according to the embodiment of the present invention.

The unit battery housing 800 is a member made of a synthetic resin such as ABS. In the unit battery housing 800, the unit batteries 100 are assembled and wired to each other.

The unit battery housing 800 has a flat plate-like base and a peripheral partition wall portion formed at a peripheral portion of front and rear surfaces constituting main surfaces of the base. The peripheral partition wall portion includes a first surface peripheral partition wall portion formed on the base front surface side and a second surface peripheral partition wall portion formed on the base rear surface side. FIG. 2 is a perspective view of the base front surface side of the unit battery housing 800, and FIG. 3 is a perspective view of the base rear surface side of the unit battery housing 800. The main surface of the battery housing on the base front surface side illustrated in FIG. 2 is referred to as a first surface 801, and the main surface of the battery housing on the base rear surface side illustrated in FIG. 3 is referred to as a second surface 812.

On the first surface 801, a first surface peripheral partition wall portion 802 is vertically installed on the base front surface so as to surround the periphery of the base front surface. An area inside the first surface peripheral partition wall portion 802 is shielded by a cover body to be described later.

In the area on the first surface 801 inside the first surface peripheral partition wall portion 802, a first surface separating partition wall portion 803 is vertically installed on the base front surface. The first surface separating partition wall portion 803 serves as a partition wall between the unit batteries 100 disposed adjacent to each other on the first surface and provides an independent chamber for housing the unit battery 100. Further, the first surface separating partition wall portion 803 functions also as a partition wall of the unit battery positioned at an end portion of the unit battery row. Thus, on the first surface 801 side, four unit battery housing spaces: a first battery housing chamber 807, a second battery housing chamber 808, a third battery housing chamber 809, and a fourth battery housing chamber 810 can be formed by the first surface separating partition wall portion 803.

On one end side of the first surface 801 and the other side thereof opposite to the one end side, a first surface intermediate partition wall portion 805 is vertically installed on the base front surface at an intermediate position between the first surface peripheral partition wall portion 802 and first surface separating partition wall portion 803. A space between the first surface separating partition wall portion 803 and the first surface intermediate partition wall portion 805 is used as a first surface sense line housing portion 811 in which a sense line for detecting a potential of the tab of the unit battery 100 is routed.

At a portion where a drawing direction of the lead-out tab of the unit battery 100 housed in the housing chamber defined by the first surface separating partition wall portion 803 and the first surface separating partition wall portion 803 cross each other, a separating partition wall cut portion 804 is formed. Similarly, at a portion where the lead-out tab drawing direction and the first surface intermediate partition wall portion 805 cross each other, an intermediate partition wall cut portion 806 is formed.

Even when an abnormality occurs in one of the plurality of the unit batteries as a result of the use of the battery module in an abnormal state to cause a necessity of discharging gas generated in the laminate film exterior material to an outside thereof, the separating partition wall cut portion 804 and the intermediate partition wall cut portion 806 function as a gas discharging structure for discharging such gas to make it possible to reduce adverse effect on the adjacent unit battery.

Also on the second surface 812, a second surface peripheral partition wall portion 813 is vertically installed on the base rear surface so as to surround a periphery of the base rear surface. An area inside the second surface peripheral partition wall portion 813 is shielded by a cover body to be described later.

In the area on the second surface 812 inside the second surface peripheral partition wall portion 813, a second surface separating partition wall portion 814 is vertically installed on the base front surface. The second surface separating partition wall portion 814 serves as a partition wall between the unit batteries 100 disposed adjacent to each other on the second surface and provides an independent chamber for housing the unit battery 100. Further, the second surface separating partition wall portion 814 functions also as a partition wall of the unit battery positioned at an end portion of the unit battery row. Thus, on the second surface 812 side, four unit battery housing spaces: a fifth battery housing chamber 818, a sixth housing chamber 819, a seventh battery housing chamber 820, and an eighth battery housing chamber 821 can be formed by the second surface separating partition wall portion 814. As a result, in the unit battery housing 800 having the first and second surfaces 801 and 812, a total of eight unit batteries 100 are housed.

On one end side of the second surface 812 and the other side thereof opposite to the one end side, a second surface intermediate partition wall portion 816 is vertically installed on the base front surface at an intermediate position between the second surface peripheral partition wall portion 813 and the second surface separating partition wall portion 814. A space between the second surface separating partition wall portion 814 and the second surface intermediate partition wall portion 816 is used as a second surface sense line housing portion 822 in which the sense line for detecting a potential of the tab of the unit battery 100 is routed.

At a portion where a drawing direction of the lead-out tab of the unit battery 100 housed in the housing chamber defined by the second surface separating partition wall portion 814 and the second surface separating partition wall portion 814 cross each other, a separating partition wall cut portion 815 is formed. Similarly, at a portion where the lead-out tab drawing direction and the second surface intermediate partition wall portion 816 cross each other, an intermediate partition wall cut portion 817 is formed.

Even when an abnormality occurs in one of the plurality of the unit batteries as a result of the use of the battery module in an abnormal state to cause a necessity of discharging gas generated in the laminate film exterior material to an outside thereof, the separating partition wall cut portion 815 and the intermediate partition wall cut portion 817 function as a gas discharging structure for discharging such gas to make it possible to reduce adverse effect on the adjacent unit battery.

As described above, the unit battery housing 800 has the four unit battery housing spaces: first battery housing chamber 807, second battery housing chamber 808, third battery housing chamber 809, and fourth battery housing chamber 810 on the first surface 801 side, and has the four unit battery housing spaces: fifth battery housing chamber 818, sixth housing chamber 819, seventh battery housing chamber 820, and eighth battery housing chamber 821 on the second surface 812 side. In total, eight unit battery housing chambers are formed on the both surfaces. Assuming that one unit battery 100 is housed in one battery housing chamber, up to eight unit batteries 100 can be housed in the unit battery housing 800 according to the present embodiment. In the battery module according to the present invention, the number of the unit batteries 100 that can be housed in the unit battery housing 800 is not limited to this example but may be arbitrary if the both surfaces of the unit battery housing 800 are used.

A first connector housing concave portion 824 serving as a space for disposing a first connector 828 for taking out a power from the series-connected unit batteries 100 is provided at one end portion (end portion at which the first and eighth battery housing chambers 807 and 821 are disposed) of the unit battery housing 800.

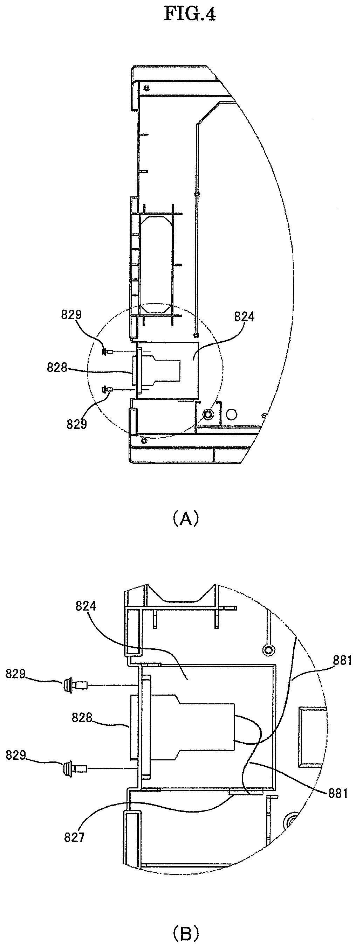

FIGS. 4A and 4B are views explaining mounting of the first connector 828 to the unit battery housing 800. FIGS. 4B is an enlarged view of FIG. 4A. The unit battery housing 800 has, in its side wall, a first connector mounting opening portion 825 for mounting of the first connector 828 and first connector mounting screw holes 826 formed at both sides of the first connector mounting opening portion 825. The first connector 828 is fitted to the first connector mounting opening portion 825, and then a mounting screw 829 is screwed into each of the first connector mounting screw holes 826, whereby the first connector 828 is fixed to the unit battery housing 800. A power supply opening portion 827 penetrating the first surface 801 and the second surface 812 is formed in the vicinity of the first connector housing concave portion 824. This allows a power supply line 881 of the first connector 828 provided on the first surface 801 side to be routed to the second surface 812 side.

A second connector mounting concave portion 832 serving as a space for disposing a second connector 840 for taking out an output from the sense line and a thermistor connecting line from the unit battery 100 is provided at one end portion (end portion at which the fourth and fifth battery housing chambers 810 and 818 are disposed) of the unit battery housing 800.

From the second connector 234, potential information of the tab of each of the series-connected unit battery 100 and temperature information inside the module can be taken out. Based on the potential information of the tab of each unit battery 100, a battery management circuit unit 1100 to be described later can manage each unit battery 100.

When a battery module 1000 is mounted to a power storage device 1300, the battery module 1000 is fitted to a connector (seventh connector 1152 to be described later) positioned deep inside a casing of the power storage device 1300 while being regulated in position by a rail member. At this time, when there is tolerance in the rail member or the like, fitting of the second and seventh connectors is difficult. Thus, the second connector 840 is configured to be slightly displaceable so as to cover such tolerance.

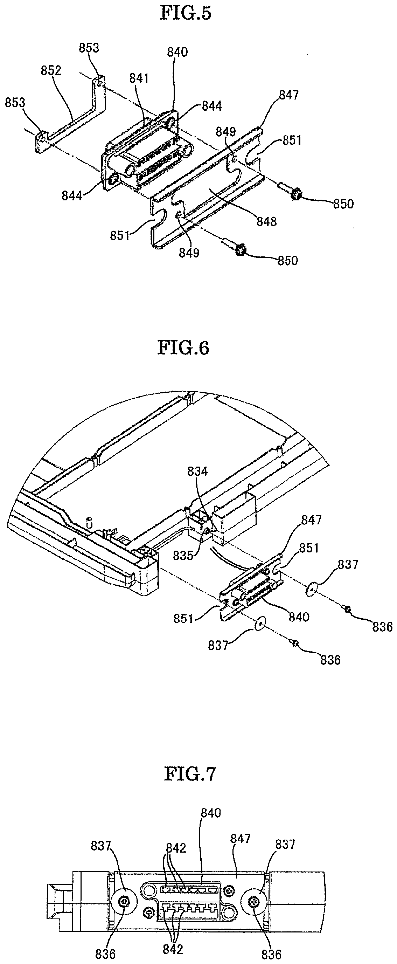

The following describes thus configured second connector 840 based on FIGS. 5 to 7.

FIG. 5 is a view explaining mounting of the second connector 840 to a connector mounting panel 847, FIG. 6 is a view explaining mounting of the connector mounting panel 847 to the unit battery housing 800, and FIG. 7 is a front view of the second connector 840 mounted to the unit battery housing 800.

Two through holes 843 (not illustrated in FIG. 5) are formed at both ends of a main body 841 of the second connector 840 and each fitted with a bush 844. An outer diameter of the bush 844 is smaller by 2Δb than an inner diameter of the through hole 843. This allows the main body 841 of the second connector 840 to be displaced with respect to the bush 844 by 2Δb.

The second connector 840 is fitted to a connector mounting opening 848 of the connector mounting panel 847 and fixed to the connector mounting panel 847 by a mounting screw 850 to be inserted/screwed into a connector mounting screw hole 849, bush 844, and a female screw hole 853 of a fastening member 852. As a result, the second connector 840 can be displaced by 2Δb with respect to the connector mounting panel 847.

A screw hole peripheral projecting portion 835 projects from a plane constituting a panel mounting base 833 of the second connector mounting concave portion 832, and a panel mounting screw hole 834 used for mounting the connector mounting panel 847 to the unit battery housing 800 is formed in a center of the screw hole peripheral projecting portion 835.

An outer diameter of the screw hole peripheral projecting portion 835 inserted through a mounting cut portion 851 formed at both sides of the connector mounting panel 847 is smaller by 2Δa than an inner portion of the mounting cut portion 851, thereby allowing the connector mounting panel 847 to be displaced with respect to the unit battery housing 800 by 2Δa.

The connector mounting panel 847 mounted with the second connector 840 is fixed to the unit battery housing 800 by a mounting screw 836 inserted through the connector mounting screw hole 849, a locking washer 837, mounting cut portion 851, and panel mounting screw hole 834.

The connector mounting panel 847 can be displaced by 2Δa with respect to the unit battery housing 800, and the second connector 840 can be displaced by 2Δb with respect to the connector mounting panel 847, with the result that the second connector 840 can be displaced by a displacement amount of 2Δa + 2Δb with respect to the unit battery housing 800. Here, by setting Δa larger than Δb, the second connector 840 of the battery module 1000 guided by the rail member while being regulated in position is fitted to the seventh connector 1152 more smoothly.

A handle through hole 854 penetrating the first and second surfaces 801 and 812 is provided at one end portion (end portion at which the first and eighth battery housing chambers 807 and 821 are disposed) of the unit battery housing 800. The handle through hole 854 and its surrounding portion function as a handle portion 855. Such handle portion 855 helps improve handleability of the battery module.

A bus bar routing through hole 867 penetrating the first and second surfaces 801 and 812 is formed between the fourth battery housing chamber 810 of the first surface 801 of the unit battery housing 800 and fifth battery housing chamber 818.

In the battery module according to the present invention, the batteries housed in each battery housing chamber are connected in series, and an inter-plane bus bar 877 can be arranged across the fourth battery housing chamber 810 of the first surface 801 and the fifth battery housing chamber 818 of the second surface 812 by the bus bar routing through hole 867. As a result, the unit battery 100 housed in the fourth battery housing chamber 810 and the unit battery housed in the fifth battery housing chamber 818 can electrically be connected to each other through the inter-plane bus bar 877.

The two unit battery positioning projection 860 are provided in each of the first to eighth battery housing chambers 807 to 821 so as to be vertically installed on the base front surface or base rear surface.

The one unit battery positioning projection 860 in each housing chamber is configured to be fitted into the positioning through hole 124 of the positive electrode lead-out tab 120, and the other unit battery positioning projection 860 is configured to be fitted into the positioning through hole 134 of the negative electrode lead-out tab 130. This allows the unit battery 100 to be quickly positioned and set with respect to the unit battery housing 800, which is effective in terms of production efficiency.

Further, a tab member placement portion 861 is provided in each housing chamber so as to be vertically installed on a plane of the base front surface or base rear surface. The tab member placement portion 861 is provided for keeping the positive electrode lead-out tab 120 of the unit battery 100, the negative electrode lead-out tab 130, and the bus bar provided between the tabs 120 and 130 spaced apart from the plane by a predetermined distance when the unit battery 100 is set in the unit battery housing 800.

A tab member fixing screw hole 862 is formed in a part of the tab member placement portion 861. Performing screw-fixing by using the tab member fixing screw hole 862 allows: (1) mechanical fixation of the unit battery 100 to the unit battery housing 800; (2) electrical connection of the tab to the bus bar of the unit battery housing; and (3) electrical connection of the tab to the sense line and power supply line. Preferably, the tab member fixing screw hole 862 is obtained by integrally molding and burying a metal cylindrical body whose inner circumference has a screw pattern in the unit battery housing 800 formed of resin.

A cross-like rib structure is provided in a part of the tab member fixing screw hole 862 of the tab member placement portion 861 so as to reinforce the tab member fixing screw hole 862. Further, at a portion where an inter-tab member bus bar 876 is provided so as to bridge the adjacent tab member fixing screw holes 862, an inter-screw hole bridging portion 863 is provided so as to correspond to the inter-tab member bus bar 876, whereby the inter-tab member bus bar 876 can be stably placed between the adjacent tab member fixing screw holes 862. Further, a bus bar positioning projection 864 projects from an upper surface of the inter-screw hole bridging portion 863. By fitting the bus bar positioning projection 864 into a through hole formed in the inter-tab member bus bar 876, the inter-tab member bus bar 876 can easily be set, thereby improving production efficiency.

The positive electrode lead-out tab 120 of the unit battery 100 housed in the first battery housing chamber 807 of the first surface 801 and the negative electrode lead-out tab 130 of the unit battery 100 housed in the eighth battery housing chamber 821 of the second surface 812 are each connected to the power supply line as well as to the sense line and, in order to fix an end portion bus bar 875 used for the connection, an end portion bus bar fixing frame 865 is provided in each of the first and eighth battery housing chambers 807 and 821.

A first end side projecting guide member 870 is provided at one end in an outer periphery of the unit battery housing 800, and a second end side projecting guide member 872 is provided at the other end opposite to the one end. The first end side projecting guide member 870 and the second end side projecting guide member 872 each have a structure in which convex portions are continued in a longitudinal direction. Sliding the first end side projecting guide member 870 and the second end side projecting guide member 872 with a concave guide member 1145 of a rail member to be described later allows the battery module 1000 according to the present invention to be housed in a casing of the power storage device 1300.

A tapered portion 871 is provided at both end portions of the first end side projecting guide member 870, and a tapered portion 873 is provided at both end portions of the second end side projecting guide member 872. With this configuration, it is possible to easily insert the battery module 1000 into the concave guide member 1145 of the rail member, thus improving handleability. Further, when the battery module 1000 is removed from the concave guide member 1145 of the rail member, each taper portion serves as an allowance, so that it is not necessary to pay attention to a removal direction of the battery module 1000 so much, thus improving handleability.

By making widths of the first end side projecting guide member 870 and the second end side projecting guide member 872 different from each other, it is possible to prevent the battery module 1000 from being inserted/removed into/from the power storage device in an unexpected attitude. The width of the first end side projecting guide member 870 or the width of the second end side projecting guide member 872 can be defined as a length thereof as viewed in a direction perpendicular to the base front surface or the base rear surface.

The first end side projecting guide member 870 and the second end side projecting guide member 872 are arranged on respective side surfaces opposite to each other which are different from the base front surface and the base rear surface and along planar directions of the respective base front and base rear surfaces.

The first end side projecting guide member 870 and the second end side projecting guide member 872 may be provided so as to project from the peripheral partition wall portions (802, 813) or to extend from the base. Further, the tapered portion can be said to be a portion varied in the projecting amount or extending amount.

In the unit battery housing 800, the unit battery 100 or various types of wiring disposed on the first surface 801 are covered by a first surface cover body 910, and the unit battery 100 or various types of wiring disposed on the second surface 812 are covered by a second surface cover body 920.

To this end, 16 cover body fixing screw holes 869 for use in screw-fixing the first surface cover body 910 to the first surface 801 by screws are formed in the first surface 801. Similarly, 16 cover body fixing screw holes 869 for use in screw-fixing the second surface cover body 920 to the first surface 801 by screws are formed in the second surface 812. The 16 cover body fixing screw holes 869 are formed in each of the first and second surfaces 801 and 812; however, the screw-fixing need not be performed at all the cover body fixing screw holes 869. Further, the number of the cover body fixing screw holes 869 to be formed in each surface is not limited to 16 but may be arbitrary.

The following describes a process of assembling components such as the unit battery 100 to the thus configured unit battery housing 800 to form the battery module according to the present invention.

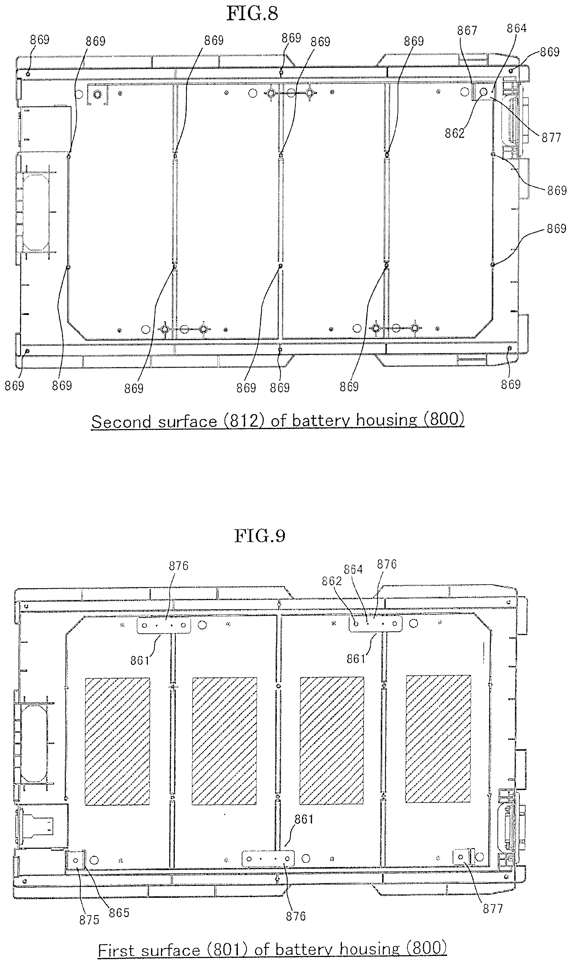

In a process illustrated in FIG. 8, the inter-plane bus bar 877 used for conductive connection between the unit battery 100 housed in the fourth battery housing chamber 810 of the first surface 801 and the unit battery 100 housed in the fifth battery housing chamber 818 of the second surface 812 is set. The inter-plane bus bar 877 is inserted through the bus bar routing through hole 867 to cause the bus bar positioning projection 864 to be fitted into a through hole formed in the inter-plane bus bar 877, whereby mounting of the inter-plane bus bar 877 is completed. A through hole corresponding to the tab member fixing screw hole 862 is also previously formed in the inter-plane bus bar 877.

In a process illustrated in FIG. 9, the bus bar positioning projection 864 is fitted into a through hole formed in the inter-tab member bus bar 876 to thereby set the inter-tab member bus bar 876 on the tab member placement portion 861. A through hole corresponding to the tab member fixing screw hole 862 is also previously formed in the inter-tab member bus bar 876. Further, in this process, the end portion bus bar 875 is set in the end portion bus bar fixing frame 865. A through hole corresponding to the tab member fixing screw hole 862 is also previously formed in the end portion bus bar 875. Further, an adhesive is applied onto a hatched portion of each battery housing chamber.

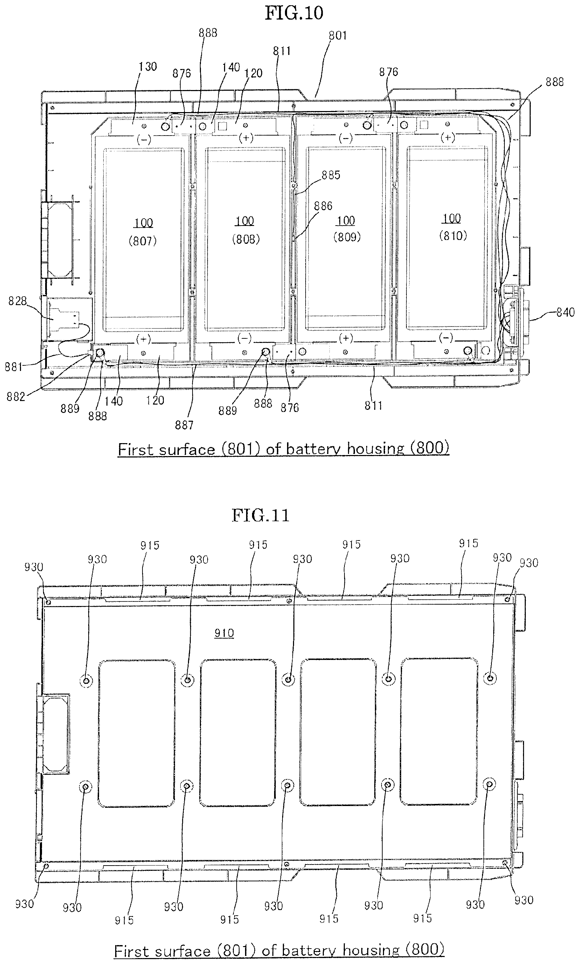

In a process illustrated in FIG. 10, the unit battery 100 is housed in each of the first battery housing chamber 807, the second battery housing chamber 808, the third battery housing chamber 809, and the fourth battery housing chamber 810 onto which the adhesive is applied. At this time, the unit battery positioning projection 860 of the unit battery housing 800 is made to penetrate the positioning through hole 124 of the positive electrode lead-out tab 120 of the unit battery 100 and the positioning through hole 134 of the negative electrode lead-out tab 130. This allows positioning to be easily performed, thus improving production efficiency. In the drawing, (+) is marked to a side at which the positive electrode lead-out tab 120 of the unit battery 100 is drawn, and (-) is marked to a side at which the negative electrode lead-out tab 130 is drawn. As illustrated in FIG. 10, on one end side of the unit battery housing 800, polarities of the tabs of the unit batteries 100 housed in the adjacent battery housing chambers are made different. With this configuration, when the tabs of unit batteries are electrically connected through the inter-tab member bus bar 876, the relevant unit batteries are connected in series.

In the present embodiment, the plurality of unit batteries 100 are arranged in one direction (direction perpendicular to the drawing direction of the lead-out tab of the unit battery 100), and the tabs of the adjacent unit batteries 100 are electrically connected to each other, whereby the series connection of the unit batteries 100 can be easily achieved.

The inter-tab member bus bar 876 and tab of the unit battery 100 are electrically and mechanically fixed to each other by a screw 889 to be inserted into the tab member fixing screw hole 862. Here, a sense line terminal 888 is also fixed to one of two screws 889 for fixing the inter-tab member bus bar 876. The sense line terminal 888 is conductively connected to the second connector 840 by a sense line 887 arranged in the first surface sense line housing portion 811, whereby the potential information of the tab of the unit battery 100 can be output from the second connector 840.

The additional tab member 140 of the unit battery 100 in the first battery housing chamber 807 is electrically and mechanically fixed, by the screw 889, to a power supply line terminal 882, the sense line terminal 888, and the end portion bus bar 875. The power supply line terminal 882 is conductively connected to the first connector 828 by the power supply line 881, whereby a positive polarity output of the battery module can be taken out from the first connector 828.

Further, a thermistor 886 for monitoring temperature of the battery module 1000 is provided between the two first surface separating partition wall portions 803 positioned between the second battery housing chamber 808 and the third battery housing chamber 809. The thermistor 886 and the second connector 840 are conductively connected to each other by a thermistor connecting line 885, whereby the temperature information can be output from the second connector 840.

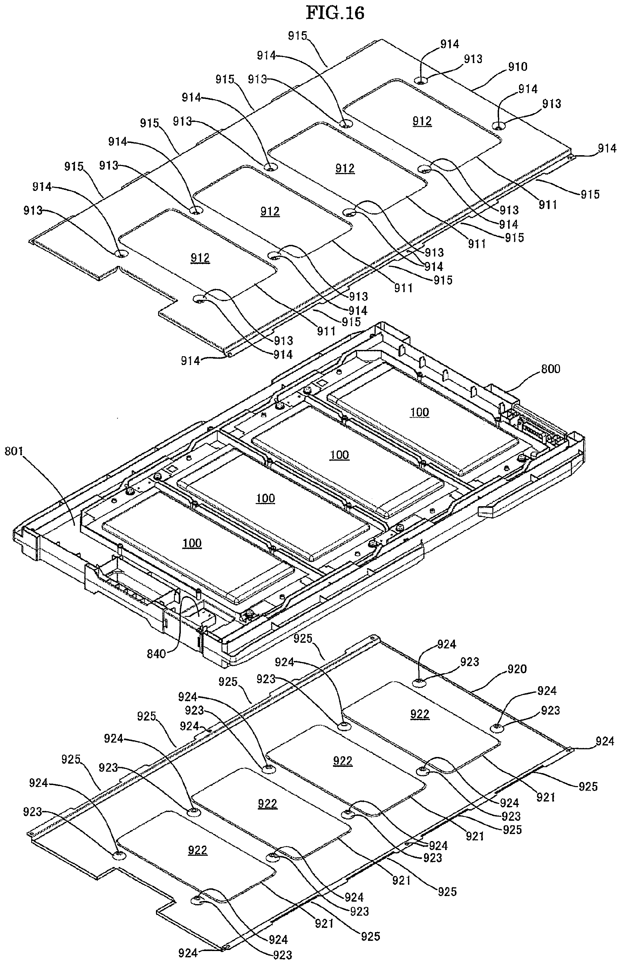

In a process illustrated in FIG. 11, the first surface cover body 910 is fixed, by screws 930, to the first surface 801 of the unit battery housing 800. Here, with reference to a perspective view of FIG. 16, the first surface cover body 910 will be described. The first surface cover body 910 and the second surface cover body 920 have the same configuration except that they have a mirror-symmetrical relationship, so only the first surface cover body 910 will be described.

The first surface cover body 910 is an aluminum cover member for shielding the unit battery 100, the power supply line 881, the sense line 887, the thermistor 886, and the like housed on the first surface 801 of the unit battery housing 800.

The first surface cover body 910 is subjected to drawing, i.e., has a battery pressing drawn portion 911 that presses the unit battery 100 housed in each battery housing chamber when the first surface cover body 910 is fixed to the first surface 801. Further, a surface that presses the unit battery 100, which is formed by the battery pressing drawn portion 911, is defined as a pressing surface 912. The pressing surface 912 formed by the battery pressing drawn portion 911 presses an electrode laminated area 105 of the unit battery 100 upon attachment of the first surface cover body 910 to thereby restrain expansion or the like of the unit battery 100 due to long time use of the unit battery 100, thereby increasing the life of the unit battery 100.

Further, screw holes 914 are formed in the first surface cover body 910 at positions corresponding to the cover body fixing screw holes 869 in a state where the first surface cover body 910 is fixed to the first surface 801. A screw hole drawn portion 913 is formed around the screw hole 914, whereby the first surface cover body 910 is fixed to the first surface 801 with a part of the first surface cover body 910 around the screw hole 914 brought into close contact with the first surface 801.

Further, a cut portion 915 is formed in the first surface cover body 910 so as to correspond to the lead-out tab of the unit battery 100 in a state where the first surface cover body 910 is fixed to the unit battery housing 800. Forming such a cut portion 915 allows exhaust performance of the battery module 1000 to be ensured.

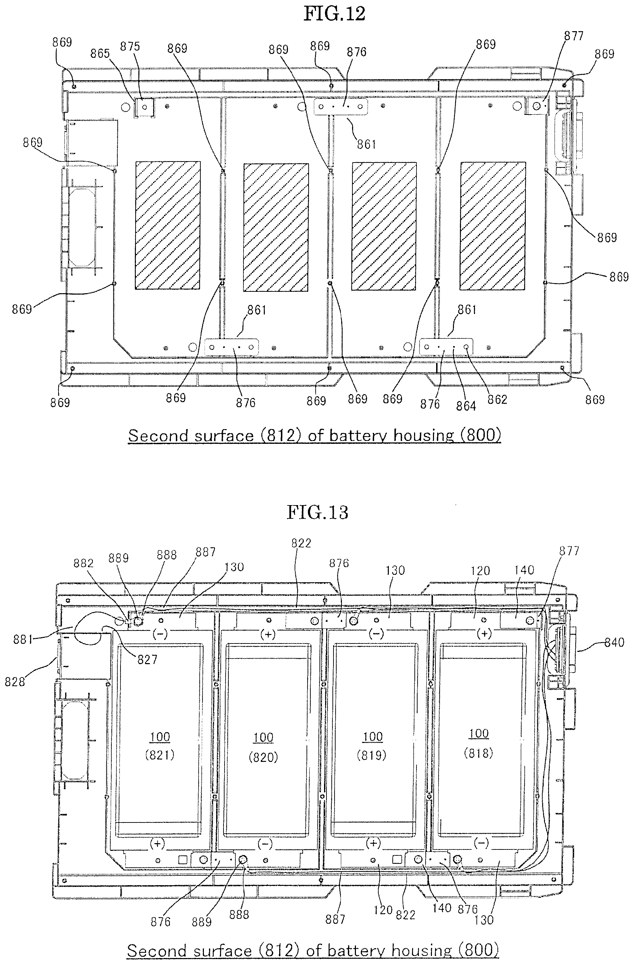

In a process illustrated in FIG. 12, on the second surface 812 of the unit battery housing 800, the bus bar positioning projection 864 is fitted into a through hole formed in the inter-tab member bus bar 876 to thereby set the inter-tab member bus bar 876 on the tab member placement portion 861. A through hole corresponding to the tab member fixing screw hole 862 is also previously formed in the inter-tab member bus bar 876. Further, in this process, the end portion bus bar 875 is set in the end portion bus bar fixing frame 865. A through hole corresponding to the tab member fixing screw hole 862 is also previously formed in the end portion bus bar 875. Further, an adhesive is applied onto a hatched portion of each battery housing chamber.

In a process illustrated in FIG. 13, on the second surface 812 of the unit battery housing 800, the unit battery 100 is housed in each of the fifth battery housing chamber 818, the sixth battery housing chamber 819, the seventh battery housing chamber 820, and the eighth battery housing chamber 821 onto which the adhesive is applied. At this time, the unit battery positioning projection 860 of the unit battery housing 800 is made to penetrate the positioning through hole 124 of the positive electrode lead-out tab 120 of the unit battery 100 and the positioning through hole 134 of the negative electrode lead-out tab 130. This allows positioning to be easily performed, thus improving production efficiency. In the drawing, (+) is marked to a side at which the positive electrode lead-out tab 120 of the unit battery 100 is drawn, and (-) is marked to a side at which the negative electrode lead-out tab 130 is drawn. As illustrated in FIG. 13, on one end side of the unit battery housing 800, polarities of the tabs of the unit batteries 100 housed in the adjacent battery housing chambers are made different. With this configuration, when the tabs of the unit batteries are electrically connected through the inter-tab member bus bar 876, the relevant unit batteries are connected in series.

In the present embodiment, the plurality of the unit batteries 100 are arranged in one direction (direction perpendicular to the drawing direction of the lead-out tab of the unit battery 100), and the tabs of the adjacent unit batteries 100 are electrically connected to each other, whereby the series connection of the unit batteries 100 can be easily achieved.

The inter-tab member bus bar 876 and the tab of the unit battery 100 are electrically and mechanically fixed to each other by the screw 889 to be inserted into the tab member fixing screw hole 862. Here, the sense line terminal 888 is also fixed to one of the two screws 889 for fixing the inter-tab member bus bar 876. The sense line terminal 888 is conductively connected to the second connector 840 by the sense line 887 arranged in the first surface sense line housing portion 811, whereby the potential information of the tab of the unit battery 100 can be output from the second connector 840.

The negative electrode lead-out tab 130 of the unit battery 100 in the eighth battery housing chamber 821 is electrically and mechanically fixed, by the screw 889, to the power supply line terminal 882, the sense line terminal 888, and the end portion bus bar 875. The power supply line terminal 882 is conductively connected to the first connector 828 by the power supply line 881, whereby a negative polarity output of the battery module can be taken out from the first connector 828.

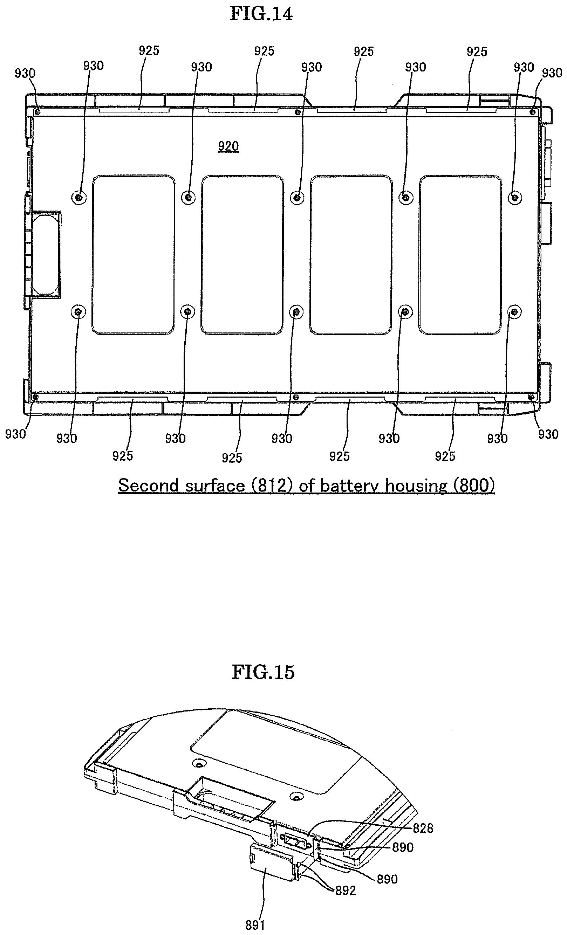

In a process illustrated in FIG. 14, the second surface cover body 920 is fixed, by the screws 930, to the second surface 812 of the unit battery housing 800.

In a process illustrated in FIG. 15, a cap member 891 is attached to the first connector 828. Voltage corresponding to the eight series-connected unit batteries 100 is applied to a conductive terminal of the first connector 828. Thus, in order to secure safety in handling the battery module 1000, such a cap member 891 is used to shield the first connector 828. The cap member 891 has two locking pieces 892. By inserting the two locking pieces 892 into two locking ports 890 which are formed in a side wall portion of the unit battery housing 800 so as to correspond to the two locking pieces 892, the cap member 891 can be attached to the first connector 828 so as to cover the same. The cap member 891 is removed when the battery module 1000 is mounted to the power storage device 1200 .

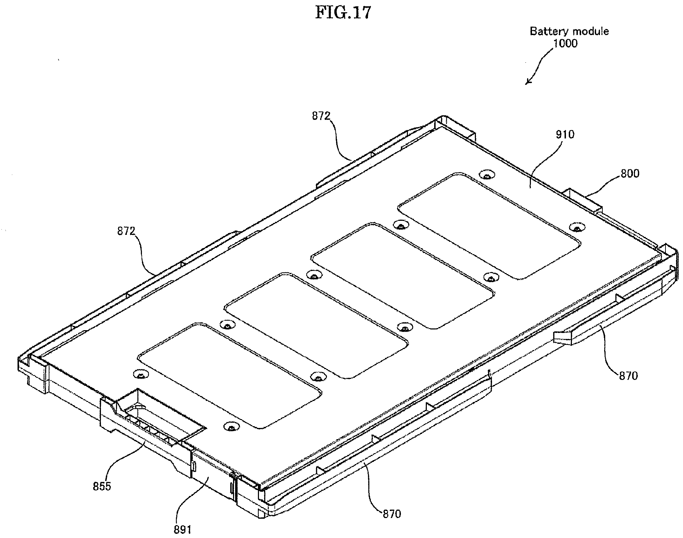

Through the above-described processes, the battery module 1000 as illustrated in a perspective view of FIG. 17 is completed.

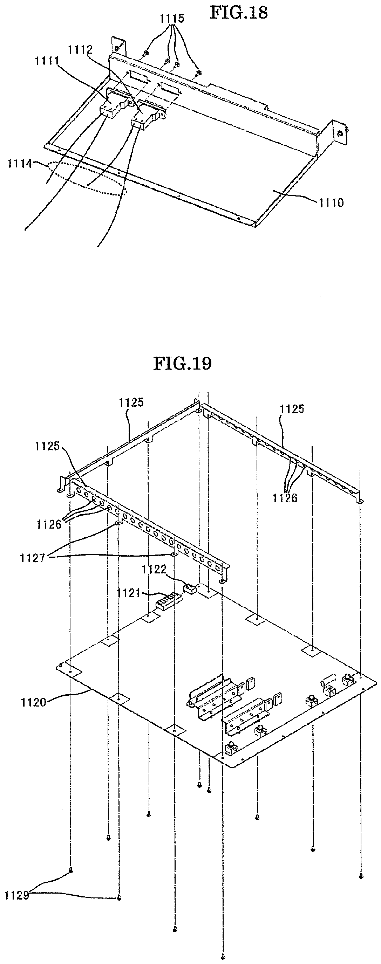

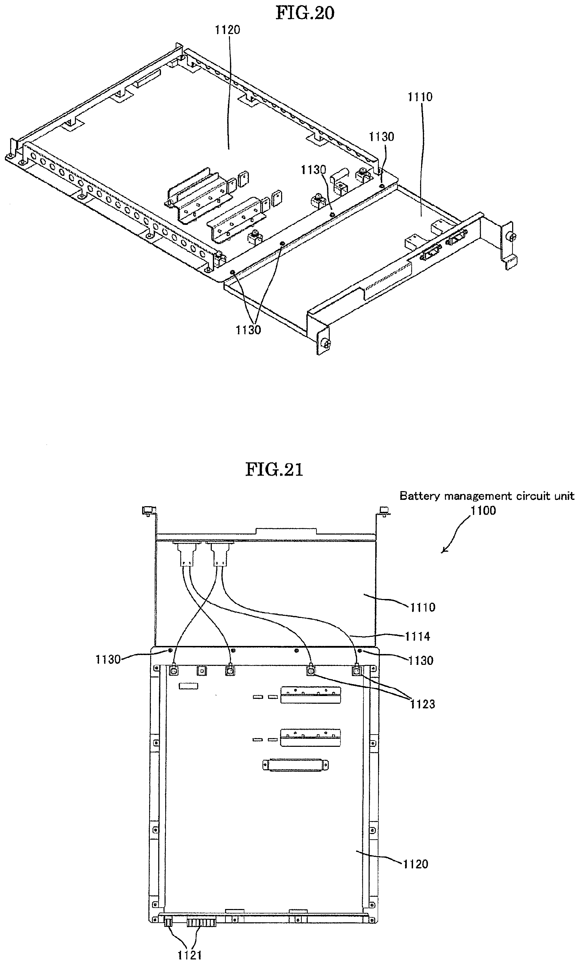

The following describes an overview of a configuration of a battery management circuit unit 1100 that manages the above-described battery module 1000 according to the present invention. FIGS. 18, 19, and 20 are views each explaining a production process of the battery management circuit unit 1100. FIG. 21 is a view illustrating the battery management circuit unit 1100.

In a process illustrated in FIG. 18, a third connector 1111 and a fourth connector 1112 are attached by screws 1115 to a connector panel 1110. Considering mountability to the power storage device 1300, the battery management circuit unit 1100 preferably has substantially the same size as that of the battery module 1000; however, when the above-described dimension is attempted to be achieved only by a circuit substrate 1120, required cost is increased. Thus, the connector panel 1110 is used.

In a process illustrated in FIG. 19, a side plate 1125 partially having ventilation holes 1126 for cooling of the circuit is fixed to the circuit substrate 1120 on which a battery management circuit is mounted, by screws 1129 to be inserted through screw hole portions 1127 of the circuit substrate 1120.

In a process illustrated in FIG. 20, the circuit substrate 1120 and the connector panel 1110 are fixed to each other by the screws 1130.

In a process illustrated in FIG. 21, lead wires 1114 of the respective third and fourth connectors 1111 and 1112 provided in the connector panel 1110 are electrically connected to terminals 1123 of the circuit substrate 1120.

The thus configured battery management circuit unit 1100 has third, fourth, and fifth connectors 1111, 1112, and 1121.

The following describes the power storage device 1300 constituted by the thus configured battery management circuit unit 1100 and the battery module 1000.

First, a configuration of a rack member 1200 housing the plurality of the battery modules 1000 and the battery management circuit unit 1100 will be described. The rack member 1200 of the present embodiment houses the 13 battery modules 1000 and the two battery management circuit units 1100; however, in the present invention, the number of the battery modules 1000 or number of the battery management circuit units 1100 is not especially limited.

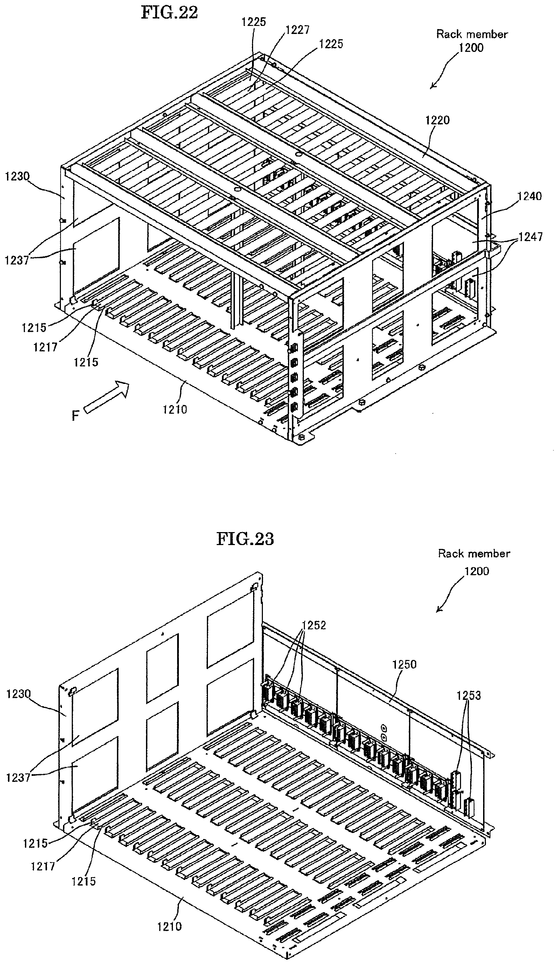

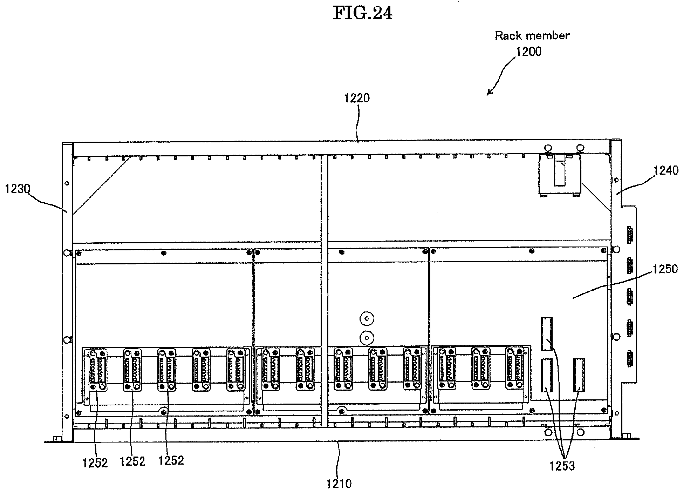

FIG. 22 is a perspective view illustrating a configuration of the rack member 1200, FIG. 23 is a view illustrating a state where a top plate 1220 and a second side plate 1240 are removed from the rack member 1200, and FIG. 24 is a front view of the rack member 1200 as viewed in a direction indicated by an arrow F in FIG. 22.

A plurality of lower guide members 1215 are provided on a bottom plate 1210 constituting a bottom portion of the rack member 1200. Further, a plurality of upper guide members 1225 are provided on a top plate 1220 constituting a ceiling portion of the rack member 1200.

The lower guide members 1215 and the upper guide members 1225 face each other so as to be able to guide the battery module 1000 to be attached/detached with respect to the rack member 1200 while supporting the battery module from above and below.

The guide members are arranged such that a predetermined interval is provided between the adjacent battery modules 1000 in a state where the battery modules 1000 are attached to the rack ) member 1200, whereby a sufficient space is ensured between the adjacent battery modules 1000. This prevents accumulation of heat generated from the battery modules 1000 constituting the power storage device 1300 therein.

Further, ventilation openings 1217 and ventilation openings 1227 are formed on the bottom plate 1210 and the top plate 1220, respectively, so as to prevent the air from staying between the adjacent battery modules 1000, thus making it possible to suppress temperature inside the power storage device 1300 from rising.

) A first side plate 1230 and a second side plate 1240 are provided between the bottom plate 1210 and the top plate 1220 so as to face each other and support the top plate from both sides.

Ventilation openings 1237 and ventilation holes 1247 are formed in the first side plate 1230 and the second side plate 1240, respectively, whereby heat radiated from the battery modules 1000 or the battery management circuit units 1100 can be discharged outside the power storage device 1300.

Since it is assumed that the power storage devices 1300 are stacked vertically, it is very important to form the ventilation openings so as to suppress temperature rise inside the power storage device 1300.

A back surface plate 1250 having a plurality of connectors is provided between the first side plate 1230 and the second side plate 1240.

The back surface plate 1250 has seventh connectors 1252 to which the second connectors 840 of the battery modules 1000 are fitted and eighth connectors 1253 to which the fifth connectors 1121 of the battery management circuit unit 1100 are fitted, whereby ) the sense information and temperature information of each battery module 1000 can be relayed to the battery management circuit unit 1100 through not illustrated wiring. Thus, the battery management circuit unit 1100 acquires the potential data of each unit battery 100 and temperature data in each battery module 1000 and performs control, such as discharge stop, based on the acquired data.

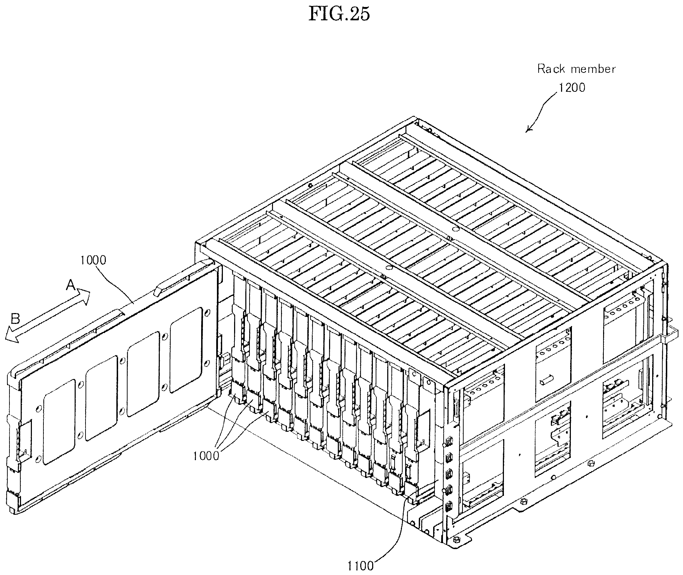

FIG. 25 illustrates a state where the battery module 1000 is slid along the guide member to be set to the rack member 1200 of the power storage device 1300. As illustrated in FIG. 25, sliding the battery module 1000 to an A side allows the battery module 1000 ) to be attached to the rack member 1200, and sliding the battery module 1000 to a B side allows the battery module 1000 to be removed from the rack member 1200. Thus, in the power storage device 1300 according to the present invention, replacement of the battery module 1000 is very easily made.

When the battery module 1000 is slid to the A side so as to be attached to the rack member 1200, the second connector 840 of the battery module 1000 needs to be fitted to the seventh connector 1152 of the back surface plate 1250 provided at the back surface side of the rack member 1200.

When there is tolerance in the guide member or the like, fitting of the second connector 840 and the seventh connector 1152 is difficult. Thus, the second connector 840 is configured to be slightly displaceable so as to cover such tolerance.

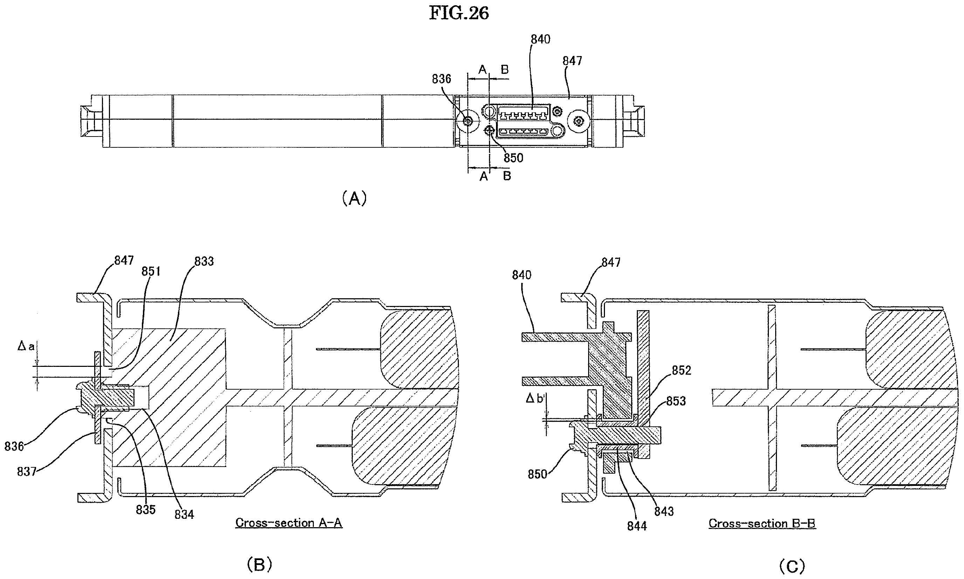

The following describes a configuration for enabling such displacement. FIGS. 26A to 26C are views each explaining a configuration around the second connector 840 of the battery module 1000. FIG. 26A is a view illustrating the second connector 840 of the battery module 1000 as viewed from the front, FIG. 26B is a ) cross-sectional view taken along a liner A-A of FIG. 26A, and FIG. 26C is a cross-sectional view taken along a liner B-B of FIG. 30A.

As illustrated in FIG. 26B, the screw hole peripheral projecting portion 835 is provided in the panel mounting base 833 of the unit battery housing 800 so as to project from the plane constituting the panel mounting base 833. The panel mounting screw hole 834 used for mounting the connector mounting panel 847 to the unit battery housing 800 is formed in the center of the screw hole peripheral projecting portion 835.

The outer diameter of the screw hole peripheral projecting ) portion 835 inserted through the mounting cut portion 851 formed at both sides of the connector mounting panel 847 is smaller by 2Δa than the inner portion of the mounting cut portion 851, thereby allowing the connector mounting panel 847 to be displaced with respect to the unit battery housing 800 by 2Δa.

Further, as illustrated in FIG. 26C, the through hole 843 is fitted with the bush 844. The outer diameter of the bush 844 is smaller by 2Δb than the inner diameter of the through hole 843. This allows the main body 841 of the second connector 840 to be displaced with respect to the bush 844 by 2Δb.

The connector mounting panel 847 can be displaced with respect to the unit battery housing 800 by 2Δa, and further, the second connector 840 can be displaced with respect to the connector mounting panel 847 by 2Δb, so that the second connector 840 can be displaced by a displacement amount of 2Δa + 2Δb with respect to the unit battery housing 800.

Here, it is preferable to establish a dimensional relationship of Δa > Δb. The second connector 840 of the battery module 1000 guided by the rail member while being regulated in position is roughly positioned with respect to the seventh connector 1252 by a tolerance of 2Δa and is then fitted to the seventh connector 1252 with a tolerance 2Δb. Thus, by setting Δa larger than Δb, the second connector 840 can be fitted to the seventh connector 1252 more smoothly.

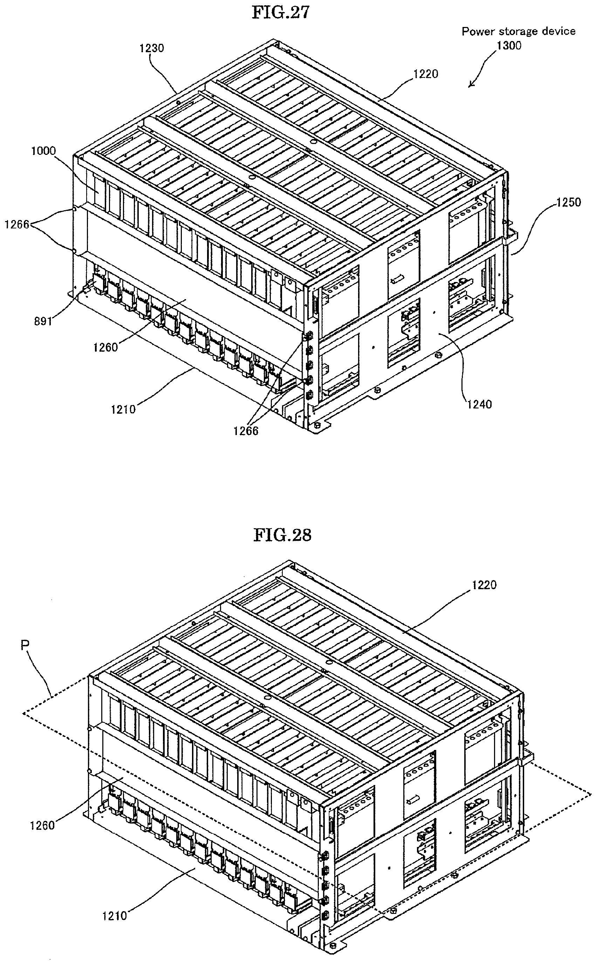

FIG. 27 illustrates a state where a pressing plate 1260 is fixed to the rack member 1200, which is an assembled state of the power storage device 1300 according to the embodiment of the present invention.

Although not illustrated in FIG. 27, the cap members 891 of the respective battery modules 1000 are removed, and then the respective battery modules 1000 are connected in series by not illustrated power supply lines. The power supply line whose one end is connected to an end of the series-connected battery modules is connected, at the other end thereof, to the third connector 1111 of the battery management circuit unit 1100.

By setting the battery modules 1000 and the battery management circuit unit 1100 in the manner as described above, the power storage device 1300 is assembled.

The stainless steel pressing plate 1260 is fixed to the first side plate 1230 and the second side plate 1240 by bolts/nuts 1266, thus making it possible to maintain a state where the battery modules 1000 are pressed in a fitting direction between the seventh connector 1252 of the back surface plate 1250 and the second connector 840 of the battery module 1000. Since the pressing plate 1260 acts so as to press the battery modules 1000, vibration resistance/impact resistance of the power storage device 1300 can be secured.

Preferably, the pressing plate 1260 does not contact both the bottom plate 1210 and top plate 1220.

This is because a space between the bottom plate 1210 and the pressing plate 1260 and a space between the top plate and the pressing plate 1260 serve as openings for air ventilation, thereby preventing an air flow from being blocked, which in turn suppresses temperature rise of the battery module 1000/the battery management circuit unit 1100.

Further, the pressing plate 1260 is disposed such that a virtual plane P positioned in the middle between the bottom plate 1210 and the top plate 1220 crosses the pressing plate 1260. FIG. 28 is a view illustrating such a virtual plane P in a dashed line. When the pressing plate 1260 is disposed in this manner, the gravity center of the battery module 1000 in a vertical direction is supported by the pressing plate 1260, whereby vibration resistance/impact resistance can effectively added to the power storage device 1300.

As described above, according to the power storage device of the present invention, the battery module 1000 can be detached/attached with respect to the power storage device 1300 while being guided by the guide member, and wiring can be made through the connectors. Further, there is provided the pressing plate 1260 that presses the battery module 1000 in the fitting direction between the connector of the back surface plate 1250 and connector of the battery module 1000. Thus, in the power storage device 1300 according to the present invention, replaceability of the battery module 1000 can be achieved, as well as, vibration resistance/impact resistance of the power storage device can be secured.

### Industrial Applicability

The present invention relates to a power storage device including a battery module constructed using a lithium ion battery, etc., application of which is being rapidly expanded in the field of storage of clean energy. The power storage device is required to have a predetermined strength against vibration or impact, in addition to the replaceability of the unit battery or battery module.

However, to realize the replaceability of the unit battery or battery module in the power storage device and to secure vibration resistance/impact resistance are contrary to each other, and it is difficult to achieve the both at the same time.

On the other hand, in the power storage device according to the present invention, the battery module can be detached/attached with respect to the power storage device while being guided by the guide member, and wiring can be made through the connectors. Further, there is provided the pressing plate that presses the battery module in the fitting direction between the connector of the back surface plate and connector of the battery module. Thus, in the power storage device according to the present invention, replaceability of the battery module can be achieved, as well as, vibration resistance/impact resistance of the power storage device can be secured, thus providing high industrial applicability.

### Reference Signs List

- 60:: Electrode laminate
- 70:: Collector
- 90:: Laminate film exterior material
- 100:: Unit battery
- 105:: Electrode laminated area
- 110:: Battery body
- 111:: Positioning through hole
- 115:: Insulating tape
- 120:: Positive electrode lead-out tab
- 124:: Positioning through hole
- 130:: Negative electrode lead-out tab
- 134:: Positioning through hole
- 135:: Through hole
- 140:: Additional tab member
- 143:: Welding portion
- 145:: Through hole
- 150:: Double-sided tape
- 800:: Unit battery housing
- 801:: First surface
- 802:: First surface peripheral partition wall portion
- 803:: First separating partition wall portion
- 804:: Separating partition wall cut portion
- 805:: First surface intermediate partition wall portion
- 806:: Intermediate partition wall cut portion
- 807:: First battery housing chamber
- 808:: second battery housing chamber
- 809:: Third battery housing chamber
- 810:: Fourth battery housing chamber
- 811:: First surface sense line housing portion
- 812:: Second surface
- 813:: Second surface peripheral partition wall portion
- 814:: Second surface separating partition wall portion
- 815:: Separating partition wall cut portion
- 816:: Second surface intermediate partition wall portion
- 817:: Intermediate partition wall cut portion
- 818:: Fifth battery housing chamber
- 819:: Sixth battery housing chamber
- 820:: Seventh battery housing chamber
- 821:: Eighth battery housing chamber
- 822:: Second surface sense line housing portion
- 824:: First connector housing concave portion
- 825:: First connector mounting opening portion
- 826:: First connector mounting screw hole
- 827:: Power supply line opening portion
- 828:: First connector
- 829:: Mounting screw
- 832:: Second connector mounting concave portion
- 833:: Panel mounting base
- 834:: Panel mounting screw hole
- 835:: Screw hole peripheral projecting portion
- 836:: Mounting screw
- 837:: Locking washer
- 840:: Second connector
- 841:: Main body
- 842:: Metal terminal portion
- 843:: Through hole
- 844:: Bush
- 847:: Connector mounting panel
- 848:: Connector mounting opening portion
- 849:: Connector mounting screw hole
- 850:: Mounting screw
- 851:: Mounting cut portion
- 852:: Fastening member
- 853:: Female screw hole
- 854:: Handle through hole
- 855:: Handle portion
- 860:: Unit battery positioning projection
- 861:: Tab member placement portion
- 862:: Tab member fixing screw hole
- 863:: Inter-screw hole bridging portion
- 864:: Bus bar positioning projection
- 865:: End portion bus bar fixing frame
- 867:: Bus bar routing through hole
- 869:: Cover body fixing screw hole
- 870:: First end side projecting guide member
- 871:: Tapered portion
- 872:: Second end side projecting guide member
- 873:: Tapered portion
- 875:: End portion bus bar
- 876:: Inter-tab member bus bar
- 877:: Inter-plane bus bar
- 881:: Power supply line
- 882:: Power supply line terminal
- 883:: Screw
- 885:: Thermistor connecting line
- 886:: Thermistor
- 887:: Sense line
- 888:: Sense line terminal
- 889:: Screw
- 890:: Licking port
- 891:: Cap member
- 892:: Locking piece
- 910:: First surface cover body
- 911:: Battery pressing drawn portion
- 912:: Pressing surface
- 913:: Screw hole drawn portion
- 914:: Screw hole
- 915:: Cut portion
- 920:: Second surface cover body
- 921:: Battery pressing drawn portion
- 922:: Pressing surface
- 923:: Screw hole drawn portion
- 924:: Screw hole
- 925:: Cut portion
- 930:: Screw
- 1000:: Battery module
- 1100:: Battery management circuit unit
- 1110:: Connector panel
- 1111:: Third connector
- 1112:: Fourth connector
- 1114:: Lead wire
- 1115:: Screw
- 1120:: Circuit substrate
- 1121:: Fifth connector
- 1123:: Terminal
- 1125:: Side plate
- 1126:: Ventilation hole
- 1127:: Screw hole portion
- 1129:: Screw
- 1130:: Screw
- 1152:: Seventh connector
- 1153:: Eighth connector
- 1200:: Rack member
- 1210:: Bottom plate
- 1215:: Lower guide member
- 1217:: Ventilation opening
- 1220:: Top plate
- 1225:: Upper guide member
- 1227:: Ventilation opening
- 1230:: First side plate
- 1237:: Ventilation opening
- 1240:: Second side plate
- 1247:: Ventilation opening
- 1250:: Back surface plate
- 1252:: Seventh connector
- 1253:: Eighth connector
- 1260:: Pressing plate
- 1266:: Bolt/nut
- 1300:: Power storage device
- P:: Virtual plane

## Claims

1. A power storage device (1300) **characterized by** comprising:
a plurality of battery modules (1000) with a plurality of unit batteries (100) that are electrically connected to each other being housed in each battery module (1000);
a rack member (1200) housing the plurality of battery modules (1000), wherein
the rack member (1200) comprises a bottom plate (1210), a top plate (1220), a first side plate (1230), a second side plate (1240) and a back surface plate (1250), wherein
the bottom plate (1210) has a plurality of lower guide members (1215);
the top plate (1220) is provided above the bottom plate (1210) and has a plurality of upper guide members (1225) facing the lower guide members (1215),
wherein the guide members (1215; 1225) are arranged such that a predetermined interval is provided between adjacent battery modules (1000) of the plurality of battery modules (1000) in a state where the battery modules (1000) are attached to the rack member (1200), whereby sufficient space is ensured between the adjacent battery modules (1000);
the first side plate (1230) and the second side plate (1240) are provided between the bottom plate (1210) and the top plate (1220) so as to face each other;
the back surface plate (1250) is provided between the first and second side plates (1230; 1240) and has a plurality of connectors (1252);
the plurality of battery modules (1000) are configured to be inserted between the lower and upper guide members (1215; 1225), the plurality of battery modules (1000) being configured to slide along the lower and upper guide members (1215; 1225) to be attached/detached, and having connectors (840) configured for fitting to the connectors (1252) of the back surface plate (1250) and
a pressing plate (1260) provided between and fixed to the first and second side plates (1230; 1240) so as to press the plurality of battery modules (1000) in a fitting direction between the connectors (1252) of the back surface plate (1250) and the connectors (840)of the plurality of battery modules (1000);
the pressing plate (1260) being disposed such that a virtual plane positioned in the middle between the bottom plate (1210) and the top plate (1220) crosses the pressing plate (1260).

2. The power storage device (1300) according to claim 1, **characterized in that**
the pressing plate (1260) does not contact the bottom plate (1210).

3. The power storage device (1300) according to claim 1 or claim 2, **characterized in that**
the pressing plate (1260) does not contact the top plate (1220).

4. The power storage device (1300) according to any one of claims 1 to 3, **characterized in that**
the pressing plate (1260) is made of a stainless steel.

5. The power storage device (1300) according to any one of claims 1 to 4, **characterized in that**
the pressing plate (1260) is fixed to the first and second side plates (1230; 1240) by bolts and nuts.

6. The power storage device (1300) according to any one of claims 1 to 5, **characterized in that**
the bottom plate (1210) has a ventilation opening.

7. The power storage device (1300) according to any one of claims 1 to 6, **characterized in that**
the top plate (1220) has a ventilation opening.

8. The power storage device (1300) according to claim 1, **characterized in that** the unit batteries (100) are lithium ion secondary batteries having an electrode laminate obtained by laminating positive and negative electrodes through separators and a laminate film exterior material housing the electrode laminate and electrolyte.

## Patentansprüche

1. Energiespeichervorrichtung (1300), **dadurch gekennzeichnet, dass** sie aufweist:
mehrere Batteriemodule (1000) mit mehreren Einheitsbatterien (100), die elektrisch miteinander verbunden sind, die in jedem Batteriemodul (1000) aufgenommen sind;
ein Gestellelement (1200), das die mehreren Batteriemodule (1000) aufnimmt, wobei
das Gestellelement (1200) eine untere Platte (1210), eine obere Platte (1220), eine erste Seitenplatte (1230), eine zweite Seitenplatte (1240) und eine Rückoberflächenplatte (1250) aufweist, wobei
die untere Platte (1210) mehrere untere Führungselemente (1215) hat;
die obere Platte (1220) über der unteren Platte (1210) bereitgestellt ist und mehrere obere Führungselemente (1225) hat, die den unteren Führungselementen (1215) zugewandt sind,
wobei die Führungselemente (1215; 1225) derart angeordnet sind, dass in einem Zustand, in dem die Batteriemodule (1000) an dem Gestellelement (1200) befestigt sind, ein vorgegebener Abstand zwischen benachbarten Batteriemodulen (1000) der mehreren Batteriemodule (1000) bereitgestellt wird, wobei ein ausreichender Raum zwischen den benachbarten Batteriemodulen (1000) sichergestellt wird;
die erste Seitenplatte (1230) und die zweite Seitenplatte (1240) zwischen der unteren Platte (1210) und der oberen Platte (1220) derart bereitgestellt sind, dass sie einander zugewandt sind;
die Rückoberflächenplatte (1250) zwischen den ersten und zweiten Seitenplatten (1230; 1240) bereitgestellt ist und mehrere Verbinder (1252) hat;
die mehreren Batteriemodule (1000) aufgebaut sind, um zwischen den unteren und oberen Führungselementen (1215; 1225) eingesetzt zu werden, wobei die mehreren Batteriemodule (1000) aufgebaut sind, um entlang der unteren und oberen Führungselemente (1215; 1225) zu gleiten, um befestigt/gelöst zu werden, und Verbinder (840) haben, die aufgebaut sind, um zu den Verbindern (1252) der Rückoberflächenplatte (1250) zu passen; und
eine Druckplatte (1260) zwischen den ersten und zweiten Seitenplatten (1230; 1240) bereitgestellt und daran befestigt ist, um die mehreren Batteriemodule (1000) in eine Montagerichtung zwischen den Verbindern (1252) der Rückoberflächenplatte (1250) und den Verbindern (840) der mehreren Batteriemodule (1000) zu drücken;
wobei die Druckplatte (1260) derart angeordnet ist, dass eine virtuelle Ebene, die in der Mitte zwischen der unteren Platte (1210) und der oberen Platte (1220) positioniert ist, die Druckplatte (1260) kreuzt.

2. Energiespeichervorrichtung (1300) nach Anspruch 1, **dadurch gekennzeichnet, dass**
die Druckplatte (1260) die untere Platte (1210) nicht berührt.

3. Energiespeichervorrichtung (1300) nach Anspruch 1 oder 2, **dadurch gekennzeichnet, dass**
die Druckplatte (1260) die obere Platte (1220) nicht berührt.

4. Energiespeichervorrichtung (1300) nach einem der Ansprüche 1 bis 3, **dadurch gekennzeichnet, dass**
die Druckplatte (1260) aus nichtrostendem Stahl hergestellt ist.

5. Energiespeichervorrichtung (1300) nach einem der Ansprüche 1 bis 4, **dadurch gekennzeichnet, dass**
die Druckplatte (1260) durch Bolzen und Muttern an den ersten und zweiten Seitenplatten (1230; 1240) befestigt ist.

6. Energiespeichervorrichtung (1300) nach einem der Ansprüche 1 bis 5, **dadurch gekennzeichnet, dass**
die untere Platte (1210) eine Lüftungsöffnung hat.

7. Energiespeichervorrichtung (1300) nach einem der Ansprüche 1 bis 6, **dadurch gekennzeichnet, dass**
die obere Platte (1220) eine Lüftungsöffnung hat.

8. Energiespeichervorrichtung (1300) nach Anspruch 1, **dadurch gekennzeichnet, dass** die Einheitsbatterien (100) Lithiumionen-Sekundärbatterien sind, die ein Elektrodenlaminat, das erhalten wird, indem positive und negative Elektroden durch Trenner laminiert werden, und ein Laminatdünnschichtaußenmaterial, welches das Elektrodenlaminat und den Elektrolyten aufnimmt, haben.

## Revendications

1. Dispositif de stockage d'énergie (1300) **caractérisé en ce qu'**il comprend :
une pluralité de modules de batterie (1000) avec une pluralité de batteries unitaires (100) qui sont connectées électriquement les unes aux autres étant logées dans chaque module de batterie (1000) ;
un organe bâti (1200) logeant la pluralité de modules de batterie (1000), dans lequel
l'organe bâti (1200) comprend une plaque de fond (1210), une plaque de dessus (1220), une première plaque de côté (1230), une seconde plaque de côté (1240) et une plaque de surface arrière (1250), dans lequel
la plaque de fond (1210) a une pluralité d'organes de guidage inférieurs (1215) ;
la plaque de dessus (1220) est prévue au-dessus de la plaque de fond (1210) et a une pluralité d'organes de guidage supérieurs (1225) en regard des organes de guidage inférieurs (1215),
dans lequel les organes de guidage (1215 ; 1225) sont agencés de sorte qu'un intervalle prédéterminé soit prévu entre des modules de batterie (1000) adjacents de la pluralité de modules de batterie (1000) dans un état où les modules de batterie (1000) sont attachés à l'organe bâti (1200), moyennant quoi un espace suffisant est garanti entre les modules de batterie (1000) adjacents ;
la première plaque de côté (1230) et la seconde plaque de côté (1240) sont prévues entre la plaque de fond (1210) et la plaque de dessus (1220) de façon à être en regard l'une de l'autre ;
la plaque de surface arrière (1250) est prévue entre les première et seconde plaques de côté (1230 ; 1240) et a une pluralité de connecteurs (1252) ;
la pluralité de modules de batterie (1000) est configurée pour être insérée entre les organes de guidage inférieur et supérieur (1215 ; 1225), la pluralité de modules de batterie (1000) étant configurée pour coulisser le long des organes de guidage inférieur et supérieur (1215 ; 1225) pour être attachée/détachée, et ayant des connecteurs (840) configurés pour s'ajuster sur les connecteurs (1252) de la plaque de surface arrière (1250) ; et
une plaque d'appui (1260) prévue entre et fixée aux première et seconde plaques de côté (1230 ; 1240) de façon à appuyer la pluralité de modules de batterie (1000) dans une direction d'ajustement entre les connecteurs (1252) de la plaque de surface arrière (1250) et les connecteurs (840) de la pluralité de modules de batterie (1000) ;
la plaque d'appui (1260) étant disposée de sorte qu'un plan virtuel positionné au milieu entre la plaque de fond (1210) et la plaque de dessus (1220) croise la plaque d'appui (1260).

2. Dispositif de stockage d'énergie (1300) selon la revendication 1, **caractérisé en ce que**
la plaque d'appui (1260) ne vient pas en contact avec la plaque de fond (1210).

3. Dispositif de stockage d'énergie (1300) selon la revendication 1 ou la revendication 2, **caractérisé en ce que**
la plaque d'appui (1260) ne vient pas en contact avec la plaque de dessus (1220).

4. Dispositif de stockage d'énergie (1300) selon l'une quelconque des revendications 1 à 3, **caractérisé en ce que**
la plaque d'appui (1260) est réalisée en acier inoxydable.

5. Dispositif de stockage d'énergie (1300) selon l'une quelconque des revendications 1 à 4, **caractérisé en ce que**
la plaque d'appui (1260) est fixée aux première et seconde plaques de côté (1230 ; 1240) par des boulons et des écrous.

6. Dispositif de stockage d'énergie (1300) selon l'une quelconque des revendications 1 à 5, **caractérisé en ce que**
la plaque de fond (1210) a une ouverture de ventilation.

7. Dispositif de stockage d'énergie (1300) selon l'une quelconque des revendications 1 à 6, **caractérisé en ce que**
la plaque de dessus (1220) a une ouverture de ventilation.

8. Dispositif de stockage d'énergie (1300) selon la revendication 1, **caractérisé en ce que** les batteries unitaires (100) sont des batteries secondaires au lithium-ion ayant un stratifié d'électrode obtenu en stratifiant des électrodes positive et négative à travers des séparateurs et un matériau extérieur de film stratifié logeant le stratifié d'électrode et l'électrolyte.
